# EUROPEAN PATENT APPLICATION

(11) **EP 4 796 370 A1**
(43) Date of publication of application: **26.08.2026**
(21) Application number: 26159538.3
(22) Date of filing: 19.02.2026
(51) Int. Cl.: B60L 53/10, B60L 53/14, B60L 53/62, B60L 53/67, H02J 7/60, H02J 7/62, H02J 7/90

(54) **CHARGING DEVICE**

(30) Priority: 25.02.2025 CN 202510223455
(71) Applicant: Huawei Technologies Co., Ltd., Shenzhen, Guangdong 518129 (CN)
(72) Inventor: PAN, Denghai, Shenzhen, Guangdong 518129 (CN); WANG, Qiao, Shenzhen, Guangdong 518129 (CN); CAI, Yi, Shenzhen, Guangdong 518129 (CN)
(74) Representative: Maiwald GmbH

(57) **Abstract**

An embodiment of this application provides a charging device (10,40). The charging device (10,40) includes a charging module (41), a switch circuit (42), and a charging connector (43). The charging module (41) is connected to the charging connector (43) through the switch circuit (42). The switch circuit (42) is configured to connect a circuit between the charging module (41) and the charging connector (43). The charging device (10,40) is configured to: when the charging module (41) outputs electric energy to an electric vehicle (20) by using the charging connector (43), when a current in the circuit between the charging module (41) and the charging connector (43) decreases to be less than or equal to a first preset current, and the current in the circuit remains unchanged for preset duration before starting to decrease, control an output voltage of the charging module (41) to be less than or equal to a sum of a voltage at a detection point in the circuit and a preset voltage. The preset duration is greater than 1 second, and the preset voltage is less than or equal to a rated breaking voltage of a switch in the switch circuit.

## Description

### TECHNICAL FIELD

This application relates to the field of charging, and more specifically, to a charging device.

### BACKGROUND

With increasing popularity of electric vehicles, charging devices used as supporting facilities also develop rapidly. The charging device usually includes a charging module, a charging connector, and a switch connected between the charging module and the charging connector. The charging module is used to charge the electric vehicle by using the charging connector. The switch is used to implement an electrical connection between the charging module and the charging connector.

Currently, in a process in which the charging module charges the electric vehicle, if a single point of failure of a switch drive occurs, for example, a drive power supply of the switch is powered off, or a drive circuit of the switch is disconnected, the switch is usually turned off under load to disconnect a circuit. However, in a process in which the switch is turned off under load, a voltage difference between two ends of the switch is likely to be greater than a maximum voltage at which the switch can be turned off under load safely. In other words, the voltage difference between the two ends of the switch is greater than a rated breaking voltage of the switch, causing switch contacts to stick together and compromising safety and reliability of the charging device.

### SUMMARY

This application provides a charging device, to make a voltage difference between two ends of a switch connected between a charging module and a charging connector less than or equal to a rated breaking voltage of the switch when the switch is turned off under load. This can prevent switch contacts from getting stuck, and improve safety and reliability of the charging device.

According to a first aspect, an embodiment of this application provides a charging device. The charging device includes a charging module, a switch circuit, and a charging connector. The charging module is connected to the charging connector through the switch circuit. The switch circuit is configured to connect a circuit between the charging module and the charging connector. The charging device is configured to: when the charging module outputs electric energy to an electric vehicle by using the charging connector, when a current in the circuit between the charging module and the charging connector decreases to be less than or equal to a first preset current, and the current in the circuit remains unchanged for preset duration before starting to decrease, control an output voltage of the charging module to be less than or equal to a sum of a voltage at a detection point in the circuit and a preset voltage. The preset duration is greater than 1 second, and the preset voltage is less than or equal to a rated breaking voltage of a switch in the switch circuit.

Based on the foregoing design, in a process in which the charging module charges a power battery of the electric vehicle in a constant current output mode, because a voltage drop of the switch in the switch circuit connected between the charging module and the charging connector is small, it may be considered that the output voltage of the charging module is approximately equal to an actual voltage of the power battery, so that the voltage at the detection point between the charging module and the charging connector can also be considered as approximately equal to the actual voltage of the power battery. Therefore, when the current in the circuit between the charging module and the charging connector decreases from a constant current output by the charging module to be less than or equal to the first preset current, the charging device is made to control the output voltage of the charging module to be less than or equal to the sum of the voltage at the detection point and the preset voltage, and the preset voltage is made to be less than or equal to the rated breaking voltage of the switch, so that a voltage difference between two ends of the switch can be less than or equal to the rated breaking voltage of the switch. In this way, when the switch is turned off under load and consequently the current in the circuit decreases to be less than or equal to the first preset current, it can be ensured that the voltage difference between the two ends of the switch is less than or equal to the rated breaking voltage of the switch. This prevents the voltage difference between the two ends of the switch from exceeding the rated breaking voltage of the switch in the process in which the switch is turned off under load. This can prevent switch contacts from getting stuck, and improve safety and reliability of the charging device. In addition, a value of the preset voltage is flexibly adjusted, so that the switch in the switch circuit can be a relay with a small rated breaking voltage, namely, a relay with a small rated breaking capacity. This can reduce costs of the switch circuit and facilitate cost optimization of the charging device.

In an implementation, when the charging module outputs electric energy, the current in the circuit decreases to be less than or equal to the first preset current when the switch is turned off, and remains unchanged for the preset duration before the switch is turned off. The charging device is configured to: when the charging module outputs electric energy and the switch is turned off, control the output voltage of the charging module to be less than or equal to the sum of the voltage at the detection point and the preset voltage.

Based on the foregoing design, when the switch in the switch circuit is turned off under load in a process in which the charging module outputs electric energy, it can be ensured that the voltage difference between the two ends of the switch is less than or equal to the rated breaking voltage of the switch. This can prevent switch contacts from getting stuck, and improve safety and reliability of the charging device.

In an implementation, the charging device is configured to: after the charging module starts to output electric energy, first obtain the voltage at the detection point, and then control the output voltage of the charging module to be less than or equal to a smallest voltage in a required voltage of the electric vehicle and the sum of the voltage at the detection point and the preset voltage. The required voltage of the electric vehicle is a required voltage sent by the electric vehicle to the charging device.

Based on the foregoing design, after the charging module starts to charge the power battery of the electric vehicle, the charging device may dynamically adjust, in real time based on the required voltage sent by the electric vehicle and the voltage at the detection point, the output voltage of the charging module to be less than or equal to the smallest voltage in the required voltage of the electric vehicle and the sum of the voltage at the detection point and the preset voltage. In other words, the charging device may dynamically adjust, in real time based on the required voltage sent by the electric vehicle and the voltage at the detection point, the output voltage of the charging module to be less than or equal to the smallest voltage in the required voltage of the electric vehicle and the sum of the voltage at the detection point and the preset voltage. In other words, the charging device may dynamically adjust a maximum value of the output voltage of the charging module in real time based on the required voltage sent by the electric vehicle and the voltage at the detection point. In this way, in a process in which the charging module charges the power battery in the constant current output mode, it can be ensured that the output voltage of the charging module meets a charging voltage requirement of the electric vehicle. In addition, when the switch in the switch circuit is turned off under load, it can also be ensured that the voltage difference between the two ends of the switch is less than or equal to the rated breaking voltage of the switch. This can prevent switch contacts from getting stuck, and improve safety and reliability of the charging device.

In an implementation, the charging device is configured to: when the charging module outputs electric energy, when the current in the circuit decreases to be less than or equal to the first preset current at a first moment, and the current in the circuit remains unchanged for the preset duration before starting to decrease, adjust the output voltage of the charging module to be equal to a smallest voltage in the required voltage of the electric vehicle and the sum of the voltage at the detection point and the preset voltage that are corresponding to the first moment, and maintain the output voltage of the charging module unchanged after the adjustment.

Based on the foregoing design, when the switch in the switch circuit is turned off under load and consequently the current in the circuit between the charging module and the charging connector decreases from a value greater than the first preset current to a value less than or equal to the first preset current, the charging device may obtain the smallest voltage in the required voltage of the electric vehicle and the sum of the voltage at the detection point and the preset voltage that are corresponding to the first moment in a time period in which the current decreases from the value greater than the first preset current to the value less than or equal to the first preset current, and make the output voltage of the charging module equal to the foregoing smallest voltage and then maintain the output voltage unchanged. In other words, when the current in the circuit decreases from being greater than the first preset current to being less than or equal to the first preset current, the charging device stops dynamically adjusting the maximum value of the output voltage of the charging module. It should be understood that, in the process in which the switch is turned off under load, if the charging device still continues to dynamically adjust the maximum value of the output voltage of the charging module in real time based on the required voltage sent by the electric vehicle and the voltage at the detection point, the output voltage of the charging module is likely to be caused to increase continuously. As a result, the voltage difference between the two ends of the switch is greater than the rated breaking voltage of the switch. Therefore, the output voltage of the charging module is maintained unchanged after being adjusted to the smallest voltage, so that it can be ensured that in the process in which the switch is turned off under load, the voltage difference between the two ends of the switch is less than or equal to the rated breaking voltage of the switch. This can prevent switch contacts from getting stuck, and improve safety and reliability of the charging device.

In an implementation, the first preset current is greater than or equal to 0 A and less than or equal to 20 A.

Based on the foregoing design, when the current in the circuit decreases from the constant current output by the charging module to be less than 20 A, the charging device may stop dynamically adjusting the maximum value of the output voltage of the charging module, to ensure that in the process in which the switch is turned off under load, the voltage difference between the two ends of the switch is less than or equal to the rated breaking voltage of the switch. This can prevent switch contacts from getting stuck, and improve safety and reliability of the charging device.

In an implementation, the charging device is configured to: when the charging module outputs electric energy, when the current in the circuit decreases to be less than or equal to the first preset current and the current in the circuit remains unchanged for the preset duration before starting to decrease, first obtain the voltage at the detection point, and then adjust the output voltage of the charging module to be less than or equal to a smallest voltage in a required voltage of the electric vehicle and the sum of the voltage at the detection point and the preset voltage.

Based on the foregoing design, when the switch in the switch circuit is turned off under load and consequently the current in the circuit decreases to be less than or equal to the first preset current, the charging device may adjust the output voltage of the charging module to be less than or equal to the smallest voltage in the required voltage of the electric vehicle and the sum of the voltage at the detection point and the preset voltage. In this way, in the process in which the switch is turned off under load, it can be ensured that the output voltage of the charging module meets the charging voltage requirement of the electric vehicle, and it can also be ensured that the voltage difference between the two ends of the switch is less than or equal to the rated breaking voltage of the switch, preventing switch contacts from getting stuck, and improving safety and reliability of the charging device.

In an implementation, the charging device is further configured to: after the charging module starts to output electric energy, when an output current of the charging module is greater than a second preset current, reduce a change speed of the output voltage of the charging module.

Based on the foregoing design, when the charging module is started, the charging module may output the voltage at a large voltage change speed. Further, after the charging module starts to output the voltage and operate, the charging device may reduce the change speed of the output voltage of the charging module when the output current of the charging module is greater than the second preset output current. In this way, stable output of the charging module can be ensured, and operation reliability of the charging module can be improved.

In an implementation, the second preset current is greater than or equal to 0 A and less than or equal to 5 A.

In an implementation, there are one or more charging modules and one or more charging connectors, the one or more charging modules are divided into one or more groups, each group of charging modules includes one charging module or at least two charging modules connected in parallel, the switch circuit includes one or more groups of first switches, and one group of charging modules is connected to one charging connector through one group of first switches. The detection point in the circuit between each charging module of the group of charging modules and the charging connector is located between each charging module and the group of first switches, or between the group of first switches and the charging connector.

Based on the foregoing design, when any charging module in the charging device charges the electric vehicle by using one charging connector connected to the any charging module, the charging device may obtain an output voltage of the any charging module or a voltage output from one group of first switches connected to the any charging module, to determine a voltage at a detection point in a circuit between the any charging module and the charging connector connected to the any charging module. In this way, flexibility of obtaining the voltage at the detection point by the charging device can be improved. In addition, compared with obtaining a voltage at another position in the circuit, obtaining, by the charging device, the output voltage of the any charging module has a faster response and higher efficiency.

In an implementation, there are a plurality of charging modules and a plurality of charging connectors, the switch circuit includes a plurality of groups of first switches and a power distribution matrix, one charging module is connected to one end of one group of first switches through the power distribution matrix, the other end of the group of first switches is connected to one charging connector, and the power distribution matrix is configured to connect a circuit between the charging module and the end of the group of first switches. The detection point in the circuit between the charging module and the charging connector is located in one of the following positions: between the charging module and the power distribution matrix, between the power distribution matrix and the group of first switches, and between the group of first switches and the charging connector.

Based on the foregoing design, when any charging module in the charging device charges the electric vehicle by using one charging connector connected to the any charging module, the charging device may obtain any one of an output voltage of the any charging module, a voltage output from the power distribution matrix, or a voltage output from one group of first switches connected to the any charging module, to determine a voltage at a detection point in a circuit between the any charging module and the charging connector connected to the any charging module. In this way, flexibility of obtaining the voltage at the detection point by the charging device can be improved.

In an implementation, the preset voltage is less than or equal to a smallest voltage in the following voltages: the rated breaking voltage of the first switch in the group of first switches, and a rated breaking voltage of a second switch that is in the power distribution matrix and that is connected between the charging module and the group of first switches.

Based on the foregoing design, when the charging device controls an output voltage of any charging module to be less than or equal to a sum of a voltage at a detection point in a circuit between the any charging module and one charging connector connected to the any charging module and the preset voltage, the preset voltage can be less than or equal to a rated breaking voltage of a first switch connected to the any charging module and a rated breaking voltage of a second switch in a power distribution matrix connected to the any charging module. In this way, it can be ensured that a voltage difference between two ends of the first switch located between the any charging module and the charging connector connected to the any charging module is less than or equal to the rated breaking voltage of the first switch and a voltage difference between two ends of the second switch located between the any charging module and the charging connector connected to the any charging module is less than or equal to the rated breaking voltage of the second switch, so that, in a process in which the first switch or the second switch is turned off under load, it can be ensured that the voltage difference between the two ends of the switch that is currently turned off under load is less than or equal to the rated breaking voltage of the switch. This can prevent switch contacts from getting stuck, and improve safety and reliability of the charging device.

In an implementation, rated output power of all charging modules in the charging device is equal. The charging device is further configured to: when the charging connector is connected to the electric vehicle, control charging modules whose quantity is equal to a rounded-up value of (Vr×Ir/Pe) to output electric energy to the electric vehicle by using the charging connector, and when a rounded-up value of (Vmin×Ir/Pe) is less than the rounded-up value of (Vr×Ir/Pe), reduce the quantity of charging modules that output electric energy to the rounded-up value of (Vmin×Ir/Pe). Vmin represents the smallest voltage in the required voltage of the electric vehicle and the sum of the voltage at the detection point in the circuit between the charging connector and the charging module that outputs electric energy and the preset voltage. Vr represents the required voltage of the electric vehicle, Ir represents a required current of the electric vehicle, and the required voltage of the electric vehicle and the required current of the electric vehicle are respectively the required voltage and a required current that are sent by the electric vehicle to the charging device. Pe represents the rated output power of the charging module.

Based on the foregoing design, before charging starts, the charging device may first calculate, based on the required voltage and the required current that are sent by the electric vehicle and the rated output power of the charging module, a quantity of charging modules that need to operate, and control the corresponding quantity of charging modules to output electric energy. After the charging module starts to output electric energy, the charging device may recalculate, based on the smallest voltage in the required voltage of the electric vehicle and the sum of the voltage at the detection point in the circuit between the charging module and the charging connector and the preset voltage, the quantity of charging modules that need to operate. Because the required voltage sent by the electric vehicle is usually greater than the actual voltage of the power battery, the smallest voltage obtained by selecting a smallest value in the required voltage of the electric vehicle and the sum of the voltage at the detection point and the preset voltage may be closer to the actual voltage of the power battery, so that the quantity, obtained based on the smallest voltage, of charging modules is also closer to an actual requirement of the electric vehicle. Further, when a quantity, obtained based on the smallest voltage, of charging modules that need to operate is less than a quantity, obtained based on the required voltage of the electric vehicle, of charging modules that need to operate, the charging device may reduce a quantity of charging modules that operate in the charging device to the quantity, obtained based on the smallest voltage, of charging modules. In this way, power utilization of the charging device can be improved when actual required power of the electric vehicle is met.

In an implementation, rated output power of all charging modules in the charging device is equal. The charging device is further configured to: when the charging connector is connected to the electric vehicle, control one charging module to output electric energy to the electric vehicle by using the charging connector, and when a rounded-up value of (Vmin×Ir/Pe) is less than a rounded-up value of (Vr×Ir/Pe) and (Vmin×Ir/Pe), make a quantity of charging modules that output electric energy equal to the rounded-up value of (Vmin×Ir/Pe). Vmin represents the smallest voltage in the required voltage of the electric vehicle and the sum of the voltage at the detection point in the circuit between the charging connector and the charging module and the preset voltage. Vr represents the required voltage of the electric vehicle, Ir represents a required current of the electric vehicle, the required voltage of the electric vehicle and the required current of the electric vehicle are respectively the required voltage and a required current that are sent by the electric vehicle to the charging device, and Pe represents the rated output power of the charging module.

Based on the foregoing design, before charging starts, the charging device may first calculate, based on the required voltage and the required current that are sent by the electric vehicle and the rated output power of the charging module, the quantity of charging modules that need to operate, and control the charging module to output electric energy. Then, the charging device may recalculate, based on the smallest voltage in the required voltage of the electric vehicle and the sum of the voltage at the detection point in the circuit between the charging module and the charging connector and the preset voltage, the quantity of charging modules that need to operate. The quantity of charging modules obtained through recalculation is closer to an actual requirement of the electric vehicle. Further, when a quantity, obtained based on the smallest voltage, of charging modules that need to operate is less than a quantity, obtained based on the required voltage of the electric vehicle, of charging modules that need to operate, the charging device may make a quantity of charging modules that operate in the charging device equal to the quantity, obtained based on the smallest voltage, of charging modules. Compared with increasing the quantity of charging modules that operate from one to the quantity of charging modules obtained based on the required voltage of the electric vehicle, this can improve power utilization of the charging device when actual required power of the electric vehicle is met.

### BRIEF DESCRIPTION OF DRAWINGS

FIG. 1 is a diagram of a scenario in which a charging device charges an electric vehicle according to an embodiment of this application;
FIG. 2 is a diagram of a circuit connection of the charging device shown in FIG. 1 according to an embodiment of this application;
FIG. 3 is a diagram of a structure in which a charging connector of the charging device shown in FIG. 2 charges an electric vehicle according to an embodiment of this application;
FIG. 4 is a diagram of a structure of a charging device according to an embodiment of this application;
FIG. 5 is a diagram of a structure of another charging device according to an embodiment of this application; and
FIG. 6 to FIG. 10 each are a diagram of a specific structure of the charging device shown in FIG. 5 according to an embodiment of this application.

### DESCRIPTION OF EMBODIMENTS

For ease of understanding embodiments of this application, the following descriptions are provided before embodiments of this application are described.

In description of embodiments of this application, a connection may be an electrical connection. The electrical connection may be understood as that signal transmission is implemented between two electrical elements through a direct electrical connection or an indirect electrical connection. For example, that A is electrically connected to B may be understood as that A is directly electrically connected to B, or may be understood as that A is indirectly electrically connected to B through one or more other electronic components.

In embodiments of this application, the terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features. In addition, in descriptions of embodiments of this application, "a plurality of" means two or more, and "at least one" and "one or more" mean one, two, or more.

In the descriptions of embodiments of this application, unless otherwise specified, "and/or" describes only an association relationship between associated objects and represents that three relationships may exist. For example, A and/or B may represent the following three cases: Only A exists, both A and B exist, and only B exists.

The following describes technical solutions of this application with reference to accompanying drawings.

First, for ease of understanding the technical solutions provided in embodiments of this application, an application scenario to which embodiments of this application are applicable is first described.

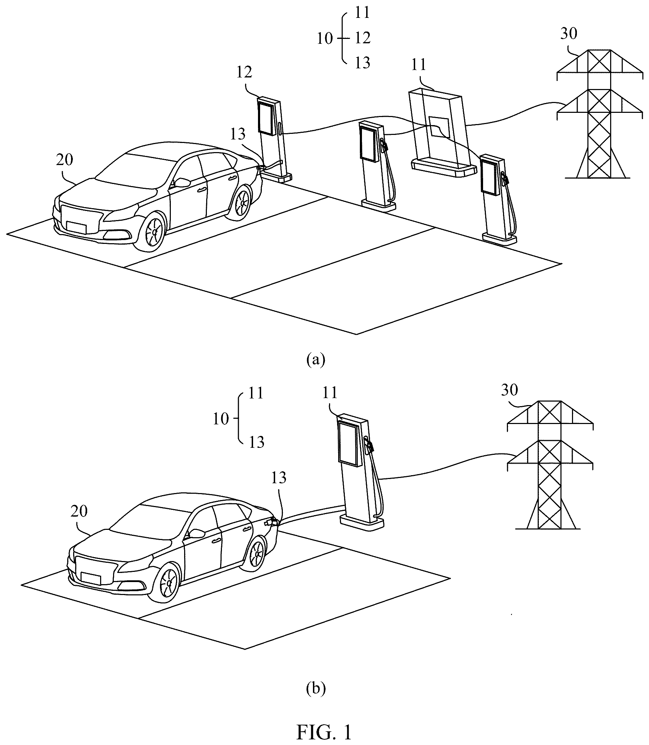

FIG. 1 is a diagram of a scenario in which a charging device 10 charges an electric vehicle 20 according to an embodiment of this application.

With reference to (a) and (b) in FIG. 1, the charging device 10 is configured to receive an alternating current output by a power grid 30, convert the alternating current into a stable direct current, and transmit the stable direct current to the electric vehicle 20, to charge the electric vehicle 20. Alternatively, the electric vehicle 20 may reversely output electric energy to the power grid 30 by using the charging device 10.

In some embodiments, as shown in (a) in FIG. 1, the charging device 10 is a split charging device. Specifically, the charging device 10 includes a charging power unit 11, a plurality of charging terminals 12, and a plurality of charging connectors 13.

The charging power unit 11 includes a plurality of power conversion circuits. The plurality of power conversion circuits are configured to convert the alternating current output by the power grid 30 into the stable direct current, and then output the stable direct current to each charging terminal 12. Each charging terminal 12 is configured to be fastened to at least one charging connector 13. Each charging connector 13 is configured to transmit, to the electric vehicle 20, direct currents that are output by the plurality of power conversion circuits to the charging terminal 12, to charge the electric vehicle 20. During specific implementation, one electric vehicle 20 may be connected to one or more charging connectors 13.

It should be understood that, in this embodiment of this application, the charging terminal 12 further includes a cabinet, a human-machine interaction interface, a charging control unit, a metering and billing unit, and the like, to perform information exchange, energy transmission, metering and billing, and the like with the electric vehicle 20.

It should be further understood that, in this embodiment of this application, the electric vehicle 20 is a transportation means driven by electric energy. The electric vehicle 20 is a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), or the like.

In some other embodiments, as shown in (b) in FIG. 1, the charging device 10 is an integrated charging device. Specifically, the human-machine interaction interface, the charging control unit, the metering and billing unit, a power distribution switch, and the like that are disposed in the charging terminal 12 in (a) in FIG. 1 may be directly disposed in the charging power unit 11, and the charging connector 13 may alternatively be directly fastened to the charging power unit 11. In this way, the charging device 10 may include only the charging power unit 11 and the at least one charging connector 13 fastened to the charging power unit 11, but does not include the charging terminal 12. For example, (b) in FIG. 1 shows an example in which two charging connectors 13 are fastened to the charging power unit 11.

The following uses the split charging device shown in (a) in FIG. 1 as an example to further describe the plurality of power conversion circuits disposed in the charging power unit 11 mentioned above.

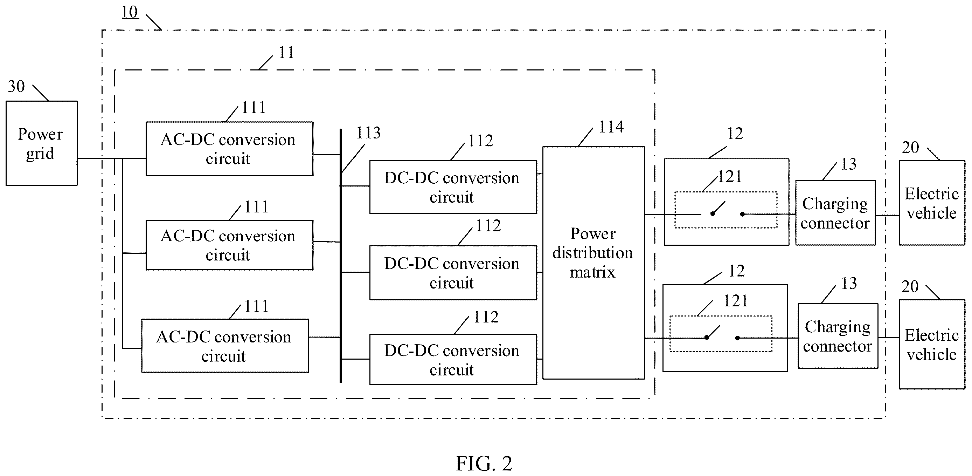

FIG. 2 is a diagram of a circuit connection of the charging device 10 shown in (a) in FIG. 1 according to an embodiment of this application.

In some embodiments, refer to FIG. 2. The plurality of power conversion circuits in the charging power unit 11 may include a plurality of alternating current-direct current (alternating current-direct current, AC-DC) conversion circuits 111 and a plurality of direct current-direct current (direct current-direct current, DC-DC) conversion circuits 112, and the charging power unit 11 further includes a direct current bus 113 and a power distribution matrix 114. An input end of each AC-DC conversion circuit 111 is configured to connect to the power grid 30, and an output end of each AC-DC conversion circuit 111 is connected to an input end of each DC-DC conversion circuit 112 through the direct current bus 113. An output end of each DC-DC conversion circuit 112 is connected to the charging connector 13 in each charging terminal 12 through the power distribution matrix 114.

During specific implementation, each AC-DC conversion circuit 111 is configured to convert the alternating current output by the power grid 30 into the direct current and output the direct current to the direct current bus 113. Each DC-DC conversion circuit 112 is configured to further convert the direct current obtained from the direct current bus 113 into a direct current applicable to the electric vehicle 20, and then output the direct current to the power distribution matrix 114. The power distribution matrix 114 is configured to connect a circuit between an output end of any DC-DC conversion circuit 112 and a charging connector 13 in any charging terminal 12, to implement dynamic power allocation between the plurality of DC-DC conversion circuits 112 and the plurality of charging connectors 13 in the charging device 10, so that power output by the charging connector 13 to the electric vehicle 20 can meet a charging requirement of the electric vehicle 20.

It should be understood that, in this embodiment of this application, the DC-DC conversion circuit 112 may also be referred to as a charging module. In addition, the power distribution matrix 114 may be understood as a matrix that includes a plurality of switches, and the power distribution matrix 114 may also be referred to as a switching matrix.

In some embodiments, still refer to FIG. 2. The charging terminal 12 may further include a plurality of groups of power distribution switches 121, and each charging connector 13 in the charging terminal 12 is connected to the power distribution matrix 114 through the group of power distribution switches 121. Each group of power distribution switches 121 is configured to connect a circuit between a charging connector 13 and the power distribution matrix 114 that are connected to the group of power distribution switches. In other words, the power distribution switch and the power distribution matrix 114 are jointly configured to implement an electrical connection between any DC-DC conversion circuit 112 and any charging connector 13 in the charging device 10.

It should be understood that, in this embodiment of this application, each group of power distribution switches 121 includes two power distribution switches, one power distribution switch is connected between a positive output end of the power distribution matrix 114 and a positive cable of the charging connector 13, and the other power distribution switch is connected between a negative output end of the power distribution matrix 114 and a negative cable of the charging connector 13.

The following uses the split charging device shown in FIG. 2 as an example to describe an example of a process in which the charging device 10 charges the electric vehicle 20.

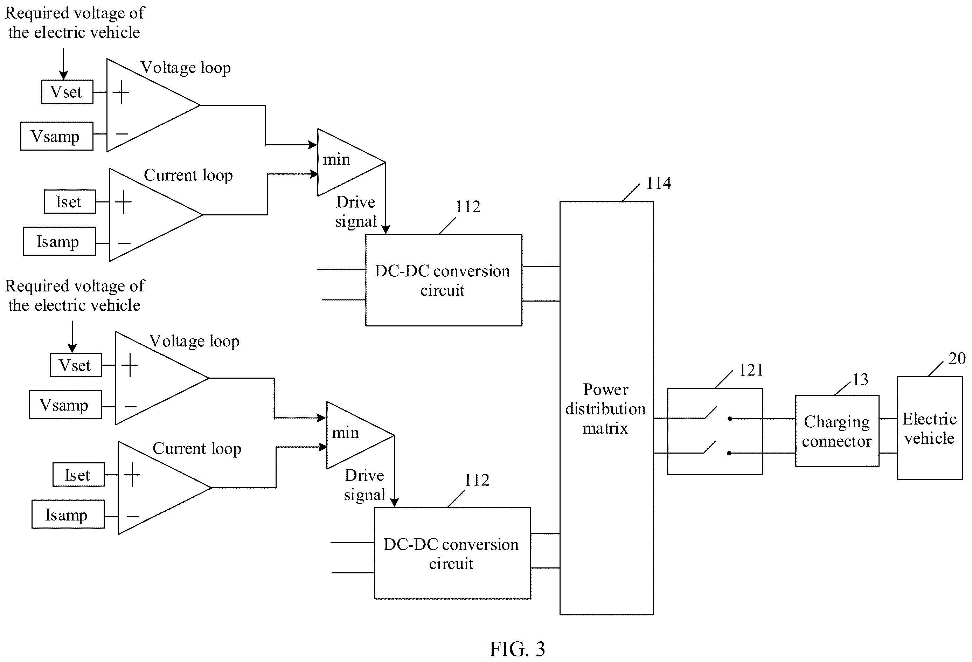

FIG. 3 is a diagram of a structure in which a charging connector 13 of the charging device 10 shown in FIG. 2 charges the electric vehicle 20.

Refer to FIG. 3. When the charging connector 13 in the charging device 10 is connected to the electric vehicle 20, the electric vehicle 20 may send a required voltage and a required current of a power battery to the charging device 10 after confirming that the vehicle is connected to a charging pile. Correspondingly, after confirming that the vehicle is connected to the charging pile, the charging device 10 may first calculate required power of the power battery based on the required voltage and the required current that are sent by the electric vehicle 20, and then calculate a quantity of DC-DC conversion circuits 112 that need to operate. Then, the charging device 10 turns on a switch in the power distribution matrix 114 and one group of power distribution switches 121 connected to the charging connector 13, to connect a circuit between the DC-DC conversion circuit 112 that needs to operate and the charging connector 13, and control the DC-DC conversion circuit 112 to output electric energy. For example, FIG. 3 shows an example in which the charging device 10 controls two DC-DC conversion circuits 112 to charge the electric vehicle 20 by using the charging connector 13.

As shown in FIG. 3, the charging device 10 usually uses a closed-loop control circuit to control output of each DC-DC conversion circuit 112. A closed-loop control circuit of each DC-DC conversion circuit 112 includes a current loop and a voltage loop. An output voltage of the DC-DC conversion circuit 112 is separately controlled by the voltage loop, and an output current of the DC-DC conversion circuit 112 is separately controlled by the current loop. Two input ends of the current loop respectively receive a signal of a sampling current Isamp and a signal of a given current Iset, the sampling current Isamp is the output current of the DC-DC conversion circuit 112, and the given current Iset is determined based on the required current of the electric vehicle 20, a rated output current of the DC-DC conversion circuit 112, and a quantity of DC-DC conversion circuits 112 that operate in the charging device 10. Two input ends of the voltage loop respectively receive a signal of a sampling voltage Vsamp and a signal of a given voltage Vset, the sampling voltage Vsamp is the output voltage of the DC-DC conversion circuit 112, and the given voltage Vset is the required voltage sent by the electric vehicle 20 to the charging device 10.

During specific implementation, the charging device 10 uses an output result (namely, an output result obtained through a min operation) obtained through selecting a smallest value in an output of the voltage loop and an output of the current loop as a basis for outputting a drive signal. The drive signal is used to control the DC-DC conversion circuit 112 to output electric energy.

When the DC-DC conversion circuit 112 outputs electric energy to charge the electric vehicle 20 normally, the closed-loop control circuit of the DC-DC conversion circuit 112 is dominated by the current loop. In this case, the output current of the DC-DC conversion circuit 112 is equal to the given current Iset of the current loop, and the output voltage of the DC-DC conversion circuit 112 is less than or equal to the given voltage Vset of the voltage loop. In other words, the DC-DC conversion circuit 112 is in a constant current output mode.

If the switch in the power distribution matrix 114 or the power distribution switch experiences a single point of failure of a switch drive, for example, a drive power supply of the switch is powered off, or a drive circuit of the switch is disconnected in a process in which the DC-DC conversion circuit 112 outputs electric energy, the switch in the power distribution matrix 114 or the power distribution switch is usually turned off under load to disconnect the circuit. For example, the switch in the power distribution matrix 114 is used as an example. In a process in which the switch is turned off under load, a current in the circuit decreases, and the closed-loop control circuit of the DC-DC conversion circuit 112 switches from being dominated by the current loop to being dominated by the voltage loop. In this case, the output voltage of the DC-DC conversion circuit 112 increases to the given voltage Vset, that is, increases to the required voltage sent by the electric vehicle 20, and the output current of the DC-DC conversion circuit 112 is less than or equal to the given current Iset of the current loop. In other words, the DC-DC conversion circuit 112 is converted from the constant current output mode to a constant voltage output mode.

However, the required voltage sent by the electric vehicle 20 is usually greater than an actual voltage of the power battery in the electric vehicle 20, and a difference between the two voltages may be great. For example, a difference between a required voltage sent by some electric vehicles 20 and an actual voltage of a power battery may reach 80 V to 100 V. As a result, in the process in which the switch is turned off under load, a voltage difference between two ends of the switch located between the DC-DC conversion circuit 112 and the power battery may reach 80 V to 100 V. A rated breaking voltage of the switch is small. For example, when the switch is a relay, the rated breaking voltage of the switch is usually less than or equal to 30 V. Consequently, in the process in which the switch is turned off under load, a case in which the voltage difference between the two ends of the switch is greater than the rated breaking voltage of the switch is likely to occur, causing switch contacts to stick together and even causing a safety accident such as burning of a circuit board and explosion of an electronic component. This compromises safety and reliability of the charging device 10.

Based on the foregoing content, an embodiment of this application provides a charging device, to make a voltage difference between two ends of a switch connected between a charging module and a charging connector less than or equal to a rated breaking voltage of the switch when the switch is turned off under load. This can prevent switch contacts from getting stuck, and improve safety and reliability of the charging device.

The following describes the charging device provided in embodiments of this application with reference to the accompanying drawings. It should be noted that in the accompanying drawings provided in embodiments of this application, a solid connection line represents a power transmission line, and a dashed connection line represents a control signal transmission line.

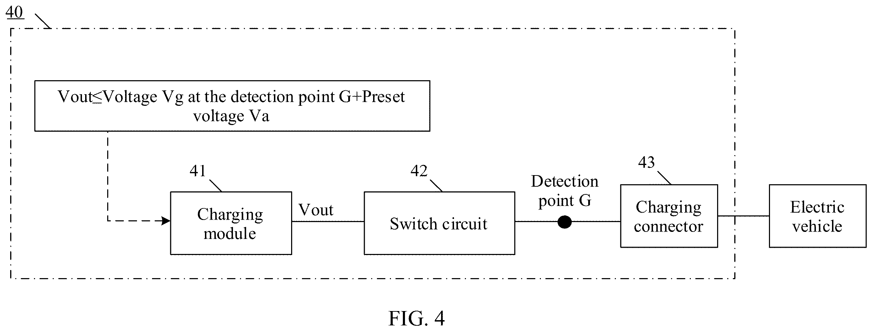

FIG. 4 is a diagram of a structure of a charging device 40 according to an embodiment of this application.

Refer to FIG. 4. The charging device 40 includes a charging module 41, a switch circuit 42, and a charging connector 43. The charging module 41 is connected to the charging connector 43 through the switch circuit 42. The switch circuit 42 is configured to connect a circuit between the charging module 41 and the charging connector 43. The charging connector 43 is configured to connect to an electric vehicle, to transmit electric energy output by the charging module 41 to the electric vehicle.

It should be understood that, in this embodiment of this application, the charging module 41 may be a DC-DC conversion circuit. For specific descriptions of the DC-DC conversion circuit, refer to related descriptions in the embodiment shown in FIG. 2. Details are not described herein again.

It should be further understood that during specific implementation, the switch circuit 42 includes a plurality of switches, and the plurality of switches are connected between an output end of the charging module 41 and the charging connector 43, to implement an electrical connection between the output end of the charging module 41 and the charging connector 43. The switch circuit 42 is specifically described below, and details are not described herein.

Still refer to FIG. 4. The charging device 40 is configured to: when the charging module 41 outputs electric energy to the electric vehicle by using the charging connector 43, when a current in the circuit between the charging module 41 and the charging connector 43 decreases to be less than or equal to a first preset current, and the current in the circuit remains unchanged for preset duration before starting to decrease, control an output voltage Vout of the charging module 41 to be less than or equal to a sum of a voltage Vg at a detection point G in the circuit between the charging module 41 and the charging connector 43 and a preset voltage Va. The preset duration is greater than 1 second, and the preset voltage is less than or equal to a rated breaking voltage of the switch in the switch circuit 42.

It should be understood that, that the current in the circuit between the charging module 41 and the charging connector 43 remains unchanged for the preset duration before starting to decrease may mean that the charging module 41 operates in a constant current output mode for the preset duration before the current in the circuit starts to decrease.

It should be further understood that, in this embodiment of this application, the first preset current may be less than a charging current that needs to be actually output by the charging module 41 to the electric vehicle at a moment at which the current in the circuit between the charging module 41 and the charging connector 43 decreases to be less than or equal to the first preset current.

Specifically, after the switch circuit 42 connects the circuit between the charging module 41 and the charging connector 43, the charging module 41 charges a power battery of the electric vehicle in a constant current output mode. Although the switch in the switch circuit 42 causes a voltage drop between the output end of the charging module 41 and an input end of the power battery, because the voltage drop of the switch is small, in a process in which the charging module 41 charges the power battery, the output voltage of the charging module 41 is greater than an actual voltage of the power battery, and a difference between the output voltage of the charging module and the actual voltage of the power battery is small. For example, when the actual voltage of the power battery is 300 V, the output voltage of the charging module 41 may be 305 V. In other words, the voltage Vg at the detection point G in the circuit between the charging module 41 and the charging connector 43 is greater than or equal to the actual voltage of the power battery, and a difference between the two voltages is small. Therefore, it may be considered that the voltage Vg at the detection point G is approximately equal to the actual voltage of the power battery.

Based on the foregoing analysis, when the current in the circuit between the charging module 41 and the charging connector 43 decreases from a constant current output by the charging module 41 to be less than or equal to the first preset current, the output voltage of the charging module 41 is made less than or equal to the sum of the voltage Vg at the detection point G and the preset voltage Va, so that a voltage difference between two ends of the switch in the switch circuit 42 connected between the charging module 41 and the charging connector 43 can be less than or equal to the preset voltage Va. In addition, because the preset voltage is less than or equal to the rated breaking voltage of the switch in the switch circuit 42, the voltage difference between the two ends of the switch in the switch circuit 42 is less than or equal to the rated breaking voltage of the switch.

In this way, when the charging module 41 charges the power battery, when the current in the circuit between the charging module 41 and the charging connector 43 decreases to be less than or equal to the first preset current because the switch in the switch circuit 42 is turned off under load, that is, when the current in the circuit decreases to be less than the charging current that needs to be actually output by the charging module 41 to the electric vehicle because the switch is turned off under load, it can be ensured that the voltage difference between the two ends of the switch is less than or equal to the rated breaking voltage of the switch. Further, in a process in which the switch is turned off under load, the voltage difference between the two ends of the switch can be prevented from exceeding the rated breaking voltage of the switch. This can prevent switch contacts from getting stuck, and improve safety and reliability of the charging device 40.

In addition, a value of the preset voltage Va is flexibly adjusted, so that the switch in the switch circuit 42 can be a relay with a small rated breaking voltage, namely, a relay with a small rated breaking capacity. This can reduce costs of the switch circuit 42 and facilitate cost optimization of the charging device 40.

In some embodiments, when the charging module 41 outputs electric energy, the current in the circuit between the charging module 41 and the charging connector 43 decreases to be less than or equal to the first preset current when the switch in the switch circuit 42 is turned off, and remains unchanged for the preset duration before the switch is turned off. The charging device 40 is configured to: when the charging module 41 outputs electric energy and the switch is turned off, control the output voltage Vout of the charging module 41 to be less than or equal to the sum of the voltage Vg at the detection point G and the preset voltage Va.

Based on the foregoing design, when the switch in the switch circuit 42 is turned off under load as a result of a drive fault in a process in which the charging module 41 outputs electric energy, it can be ensured that the voltage difference between the two ends of the switch is less than or equal to the rated breaking voltage of the switch. This can prevent switch contacts from getting stuck, and improve safety and reliability of the charging device 40.

It should be understood that during specific implementation, the charging device 40 may obtain the voltage Vg at the detection point G when detecting that the current in the circuit between the charging module 41 and the charging connector 43 decreases to be less than or equal to the first preset current. Alternatively, the charging device 40 may obtain the voltage Vg at the detection point G in real time or periodically in the process in which the charging module 41 outputs electric energy.

In some embodiments, still refer to FIG. 4. For example, the charging device 40 is configured to: when the charging module 41 outputs electric energy, when the current in the circuit between the charging module 41 and the charging connector 43 decreases to be less than or equal to the first preset current and the current in the circuit remains unchanged for the preset duration before starting to decrease, first obtain the voltage Vg at the detection point G, and then adjust the output voltage of the charging module to be less than or equal to a smallest voltage in a required voltage Vr of the electric vehicle and the sum of the voltage Vg at the detection point G and the preset voltage Va.

It should be understood that, in this embodiment of this application, the required voltage Vr sent by the electric vehicle is greater than the actual voltage of the power battery in the electric vehicle and is less than a maximum voltage at which the power battery is allowed to be charged.

Specifically, when the charging module 41 charges the power battery in the constant current output mode, a given voltage of a voltage loop in a closed-loop control circuit of the charging module 41 may be the required voltage Vr sent by the electric vehicle. When the switch in the switch circuit 42 is turned off under load as a result of a drive fault, the current in the circuit between the charging module 41 and the charging connector 43 decreases from the constant current output by the charging module 41 to a current less than or equal to the first preset current. In this case, the charging device 40 may obtain the voltage Vg at the detection point G, and adjust the given voltage of the voltage loop in the closed-loop control circuit of the charging module 41 to the smallest voltage in the required voltage Vr of the electric vehicle and the sum of the voltage Vg at the detection point G and the preset voltage Va. In this way, when the charging module 41 is switched from the constant current output mode to a constant voltage output mode, the output voltage of the charging module 41 can be less than or equal to the required voltage Vr of the electric vehicle, or less than or equal to the sum of the voltage Vg at the detection point G and the preset voltage Va, and maintained unchanged.

It should be understood that, for related descriptions of the voltage loop and switching the charging module 41 from the constant current output mode to the constant voltage output mode, refer to related descriptions in the embodiment shown in FIG. 3. Details are not described herein again.

Based on the foregoing design, it can be ensured that the output voltage of the charging module 41 meets a charging voltage requirement of the electric vehicle in a process in which the switch in the switch circuit 42 is turned off under load, and it can also be ensured that in the process in which the switch is turned off under load, the voltage difference between the two ends of the switch is less than or equal to the rated breaking voltage of the switch, preventing switch contacts from getting stuck, and improving safety and reliability of the charging device 40.

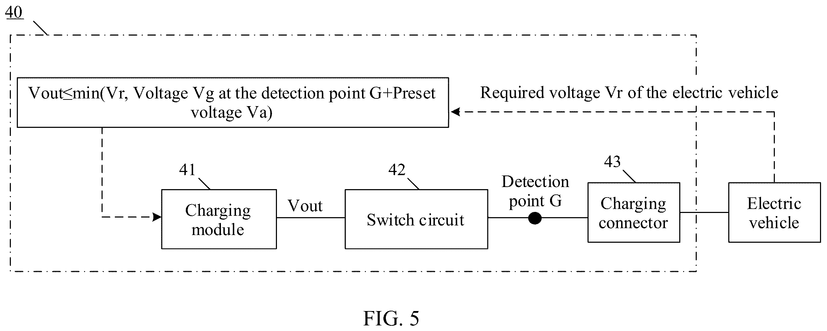

In some other embodiments, FIG. 5 is a diagram of a structure of another charging device 40 according to an embodiment of this application. The charging device 40 is configured to: after the charging module 41 starts to output electric energy, first obtain the voltage Vg at the detection point G, and then control the output voltage Vout of the charging module 41 to be less than or equal to the smallest voltage in the required voltage Vr of the electric vehicle and the sum of the voltage Vg at the detection point G and the preset voltage Va. In other words, Vout≤min(Vr, Vg+Va). The smallest voltage in the required voltage Vr of the electric vehicle and the sum of the voltage Vg at the detection point G and the preset voltage Va may also be denoted as Vmin.

Specifically, after the charging module 41 starts to output electric energy, the charging device 40 may obtain the voltage Vg at the detection point G in real time or periodically, and dynamically adjust, in real time, the given voltage of the voltage loop in the closed control circuit of the charging module 41 to the smallest voltage Vmin in the required voltage Vr of the electric vehicle and the sum of the voltage Vg at the detection point G and the preset voltage Va, to control the output voltage Vout of the charging module 41 to be less than or equal to the voltage Vmin. In other words, the charging device 40 may dynamically adjust a maximum value of the output voltage of the charging module 41 in real time based on the required voltage Vr sent by the electric vehicle and the voltage Vg at the detection point G.

It should be understood that for specific descriptions of adjusting the given voltage of the voltage loop in the charging module 41 to the voltage Vmin, refer to related descriptions in the embodiment shown in FIG. 3. Details are not described herein again.

Based on the foregoing design, when the charging module 41 charges the power battery in the constant current output mode, it can be ensured that the output voltage Vout of the charging module 41 is less than or equal to the required voltage Vr of the electric vehicle, so that the output voltage Vout of the charging module 41 meets a charging requirement of the electric vehicle. In addition, when the switch in the switch circuit 42 is turned off under load as a result of a drive fault, it can be ensured that the voltage difference between the two ends of the switch is less than or equal to the rated breaking voltage of the switch. This can prevent switch contacts from getting stuck, and improve safety and reliability of the charging device 40.

In some embodiments, still refer to FIG. 5. The charging device 40 is configured to: when the charging module 41 outputs electric energy: when the current in the circuit between the charging module 41 and the charging connector 43 decreases to be less than or equal to the first preset current at a first moment, and the current in the circuit remains unchanged for the preset duration before starting to decrease, adjust the output voltage Vout of the charging module 41 to be equal to a smallest voltage Vmin in the required voltage Vr of the electric vehicle and the sum of the voltage Vg at the detection point G and the preset voltage Va that are corresponding to the first moment, and maintain the output voltage Vout of the charging module 41 unchanged after the adjustment.

It should be understood that, in this embodiment of this application, the first moment may be a moment at which the current in the circuit between the charging module 41 and the charging connector 43 decreases from a value greater than the first preset current to a value equal to the first preset current, or may be a moment at which the current in the circuit decreases from a value greater than the first preset current to a value less than the first preset current.

Specifically, when the current in the circuit between the charging module 41 and the charging connector 43 decreases from the value greater than the first preset current to the value less than or equal to the first preset current at the first moment because the switch in the switch circuit 42 is turned off under load, the charging device 40 may obtain the smallest voltage Vmin in the required voltage Vr of the electric vehicle and the sum of the voltage Vg at the detection point G and the preset voltage Va that are corresponding to the first moment, and adjust the given voltage of the voltage loop in the charging module 41 to be equal to the foregoing smallest voltage Vmin and then maintain the given voltage unchanged. Correspondingly, the charging module 41 starts to switch from the constant current output mode to the constant voltage output mode, and the output voltage Vout of the charging module 41 remains unchanged after increasing from being less than or equal to the given voltage of the voltage loop to being equal to the given voltage of the voltage loop. In other words, when detecting that the current in the circuit decreases to be less than or equal to the first preset current, the charging device 40 may stop dynamically adjusting the maximum value of the output voltage Vout of the charging module 41.

It should be understood that, in the process in which the switch in the switch circuit 42 is turned off under load, if the charging device 40 still dynamically adjusts the given voltage of the voltage loop based on the required voltage Vr sent by the electric vehicle and the voltage Vg at the detection point G, that is, if the charging device 40 still dynamically adjusts the maximum value of the output voltage Vout of the charging module 41, the output voltage Vout of the charging module 41 is likely to be caused to increase continuously. As a result, the voltage difference between the two ends of the switch is greater than the rated breaking voltage of the switch. Therefore, in the process in which the switch in the switch circuit 42 is turned off under load, the output voltage Vout of the charging module 41 is increased to be equal to the given voltage of the voltage loop and maintained unchanged, so that it can be ensured that the voltage difference between the two ends of the switch in the switch circuit 42 is less than or equal to the rated breaking voltage of the switch. This can prevent switch contacts from getting stuck, and improve safety and reliability of the charging device 40.

In some embodiments, still refer to FIG. 5. The first preset current is greater than or equal to 0 A and less than or equal to 20 A.

Based on the foregoing design, when the current in the circuit between the charging module 41 and the charging connector 43 decreases to be less than 20 A, the charging device 40 may stop dynamically adjusting the maximum value of the output voltage of the charging module 41, to ensure that in the process in which the switch in the switch circuit 42 is turned off under load, the voltage difference between the two ends of the switch is less than or equal to the rated breaking voltage of the switch. This can prevent switch contacts from getting stuck, and improve safety and reliability of the charging device 40.

In some embodiments, with reference to FIG. 4 and FIG. 5, the charging device 40 is further configured to: before the charging module 41 starts to output electric energy, the switch in the switch circuit 42 is in a turned off state, and both the current in the circuit between the charging module 41 and the charging connector 43 and the voltage Vg at the detection point G are 0. In this case, the charging device 40 may first use the required voltage Vr sent by the electric vehicle as the given voltage of the voltage loop in the closed control circuit of the charging module 41. After the charging module 41 starts to output electric energy, the voltage Vg at the detection point G starts to increase from 0. In this case, the charging device 40 may obtain the voltage Vg at the detection point G in real time or periodically, to dynamically adjust the given voltage of the voltage loop in the closed control circuit of the charging module 41.

In some embodiments, still with reference to FIG. 4 and FIG. 5, the charging device 40 is further configured to: after the charging module 41 starts to output electric energy, when an output current of the charging module 41 is greater than a second preset current, reduce a change speed of the output voltage Vout of the charging module 41.

Specifically, before the charging module 41 is started, the charging device 40 may first detect the output current of the charging module 41, and when the output current of the charging module 41 is less than or equal to the second preset current, determine that the charging module 41 can operate normally, to control the charging module 41 to start to output electric energy, and make the output voltage Vout of the charging module 41 increase at a fast change speed. For example, the change speed of the output voltage Vout of the charging module 41 may be 1 V/ms.

Further, after the charging module 41 starts to output electric energy, the charging device 40 may detect the output current of the charging module 41 in real time or periodically, and when the output current of the charging module 41 is greater than the second preset current, reduce the change speed of the output voltage Vout of the charging module 41. For example, the change speed of the output voltage Vout of the charging module 41 is reduced from 1 V/ms to 0.2 V/ms. In this way, stable output of the charging module 41 can be ensured, and operation reliability of the charging module 41 can be improved.

For example, the second preset current may be greater than or equal to 0 A and less than or equal to 5 A.

The following uses an example in which the charging device 40 shown in FIG. 5 obtains the voltage Vg at the detection point G in real time or periodically, and dynamically adjusts the given voltage of the voltage loop in the closed control circuit of the charging module 41, to further describe in detail the switch circuit 42 connected between the charging module 41 and the charging connector 43.

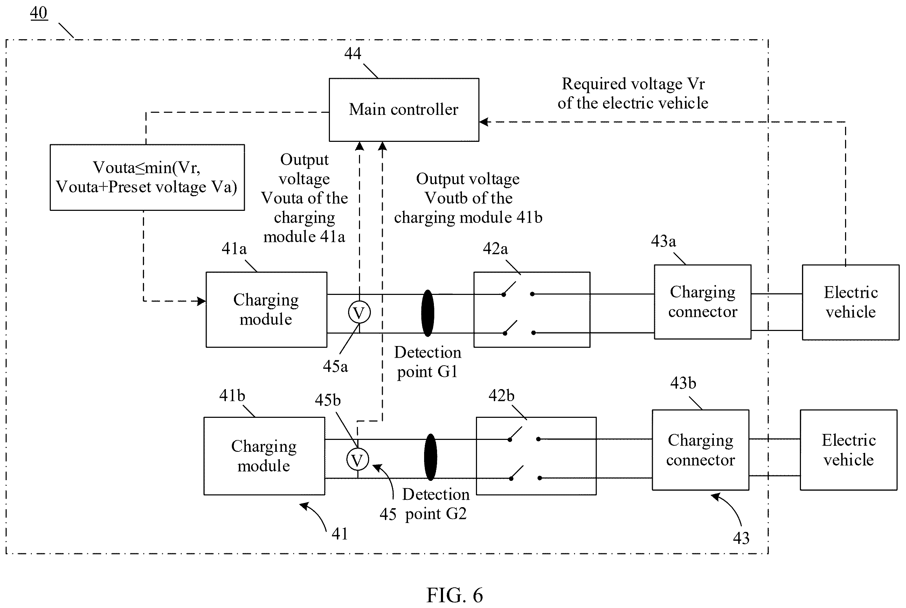

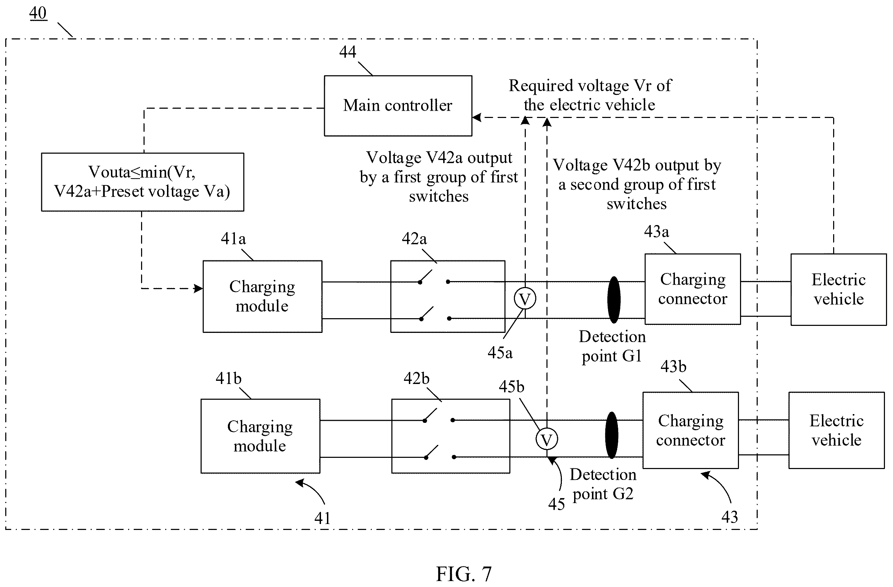

FIG. 6 and FIG. 7 each are a diagram of a specific structure of the charging device 40 shown in FIG. 5 according to an embodiment of this application.

In some embodiments, with reference to FIG. 6 and FIG. 7, there are one or more charging modules 41 and one or more charging connectors 43 in the charging device 40, the one or more charging modules 41 may be divided into one or more groups, each group of charging modules 41 includes one charging module 41 or at least two charging modules 41 connected in parallel, and the switch circuit 42 includes one or more groups of first switches. One group of charging modules 41 is connected to one charging connector 43 through one group of first switches. In other words, the one or more groups of charging modules 41 in the charging device 40 are in a one-to-one correspondence with the one or more groups of first switches and the one or more charging connectors 43, and each group of charging modules 41 is connected to one corresponding charging connector 43 through one corresponding group of first switches. The charging device 40 may be, for example, the integrated charging device shown in (b) in FIG. 1.

In an example, each group of first switches includes two first switches, and the two first switches are single-pole single-throw switches. One first switch is connected between a positive output end corresponding to one group of charging modules 41 and a positive cable of the charging connector 43, and the other first switch is connected between a negative output end corresponding to the group of charging modules 41 and a negative cable of the charging connector 43.

In another example, each group of first switches may include one first switch, and the first switch is a dual single-pole single-throw switch. In other words, the first switch includes two groups of contacts, and each group of contacts includes one static contact and one moving contact. One group of contacts of the first switch is connected between a positive output end corresponding to one group of charging modules 41 and a positive cable of the charging connector 43, and the other group of contacts of the first switch is connected between a negative output end corresponding to the group of charging modules 41 and a negative cable of the charging connector 43.

It should be understood that, for ease of description and understanding, this embodiment of this application is described by using an example in which each group of first switches includes two first switches, that is, each group of first switches includes two single-pole single-throw switches.

It should be further understood that, in this embodiment of this application, the first switch may also be referred to as a power distribution switch. For specific descriptions of the power distribution switch, refer to related descriptions in the embodiment shown in FIG. 3. Details are not described herein again.

In some embodiments, refer to FIG. 6. A detection point in a circuit between each charging module 41 in any group of charging modules 41 of the charging device 40 and one charging connector 43 that is correspondingly connected to the charging module is located between the charging module 41 and one group of first switches that are correspondingly connected to the charging module. In this way, a voltage at the detection point corresponding to each charging module 41 may be understood as an output voltage of the charging module.

For example, as shown in FIG. 6, the charging device 40 includes two groups of charging modules 41 and two charging connectors 43. Each group of charging modules 41 includes one charging module 41, that is, includes a charging module 41a, a charging module 41b, a charging connector 43a, and a charging connector 43b. The switch circuit 42 includes two groups of first switches, that is, includes a first group of first switches 42a and a second group of first switches 42b. An output end of the charging module 41a is connected to the charging connector 43a through the first group of first switches 42a, and an output end of the charging module 41b is connected to the charging connector 43b through the second group of first switches 42b.

A detection point G1 in a circuit between the output end of the charging module 41a and the charging connector 43a is located between the output end of the charging module 41a and the first group of first switches 42a, and a detection point G2 in a circuit between the output end of the charging module 41b and the charging connector 43b is located between the charging module 41b and the second group of first switches 42b. In this way, when the charging module 41a outputs electric energy, a voltage at the detection point G1 may be understood as an output voltage Vouta of the charging module 41a. Alternatively, when the charging module 41b outputs electric energy, a voltage at the detection point G2 may be understood as an output voltage Voutb of the charging module 41b.

Based on the foregoing design, when any charging module 41 in the charging device 40 charges the electric vehicle by using one charging connector 43 connected to the any charging module, the charging device 40 may obtain an output voltage of the any charging module 41, to determine a voltage at a detection point in a circuit between the any charging module 41 and the charging connector 43 connected to the any charging module. In addition, compared with obtaining a voltage at another position of the circuit between the charging module 41 and the charging connector 43 connected to the any charging module, obtaining, by the charging device 40, the output voltage of the any charging module 41 has a faster response and higher efficiency.

Refer to FIG. 6. In an example, the charging device 40 is configured to: after the charging module 41a starts to output electric energy to the electric vehicle by using the charging connector 43a, first obtain the output voltage Vouta of the charging module 41a, and then control the output voltage Vouta of the charging module 41a to be less than or equal to a smallest voltage in the required voltage Vr of the electric vehicle and a sum of the output voltage Vouta of the charging module 41a and the preset voltage Va. In other words, Vouta≤min(Vr, Vouta+Va).

Specifically, when the charging connector 43a is connected to the electric vehicle, the charging device 40 may first control the first switch in the first group of first switches 42a to be turned on, and then control the charging module 41a to output electric energy to the electric vehicle by using the charging connector 43a. After the charging module 41a starts to output electric energy, the charging device 40 may obtain the output voltage Vouta of the charging module 41a in real time or periodically, and dynamically adjust a given voltage of a voltage loop in a closed control circuit of the charging module 41a to the smallest voltage in the required voltage Vr of the electric vehicle and the sum of the output voltage Vouta of the charging module 41a and the preset voltage Va. For specific descriptions, refer to the related descriptions in embodiments shown in FIG. 3 to FIG. 5. Details are not described herein again.

Based on the foregoing design, in a process in which the charging module 41a charges the power battery, a voltage difference between two ends of the first switch in the first group of first switches 42a can always be less than or equal to the preset voltage Va. Because the preset voltage Va is less than or equal to the rated breaking voltage of the first switch in the first group of first switches 42a, when the first switch in the first group of first switches 42a is turned off under load, it can be ensured that the voltage difference between the two ends of the first switch is less than or equal to the rated breaking voltage of the first switch.

In some other embodiments, refer to FIG. 7. A detection point in a circuit between each charging module 41 in any group of charging modules 41 of the charging device 40 and one charging connector 43 that is correspondingly connected to the charging module is located between one group of first switches that are correspondingly connected to the charging module and one charging connector 43 that is correspondingly connected to the charging module. In this way, a voltage at the detection point corresponding to the charging module 41 in the any group of charging modules 41 may be understood as a voltage output from the group of first switches that are correspondingly connected to the charging module.

For example, as shown in FIG. 7, an example in which the output end of the charging module 41a in the charging device 40 is connected to the charging connector 43a through the first group of first switches 42a, and the output end of the charging module 41b is connected to the charging connector 43b through the second group of first switches 42b. The detection point G1 in the circuit between the charging module 41a and the charging connector 43a is located between the first group of first switches 42a and the charging connector 43a, and the detection point G2 in the circuit between the output end of the charging module 41b and the charging connector 43b is located between the second group of first switches 42b and the charging connector 43b.

In this way, when the charging module 41a outputs electric energy, the voltage at the detection point G1 may be understood as a voltage V42a output from the first group of first switches 42a. Alternatively, when the charging module 41b outputs electric energy, the voltage at the detection point G2 may be understood as a voltage V42b output from the second group of first switches 42b.

Based on the foregoing design, when any charging module 41 in the charging device 40 charges the electric vehicle by using one charging connector 43 connected to the any charging module, the charging device 40 may obtain a voltage output from one group of first switches connected to the any charging module 41, to determine a voltage at a detection point in a circuit between the any charging module 41 and the charging connector 43 connected to the any charging module.

For example, as shown in FIG. 7, when the charging module 41a outputs electric energy to the electric vehicle by using the charging connector 43a, the charging device 40 may control the output voltage Vouta of the charging module 41a to be less than or equal to a smallest voltage in the required voltage Vr of the electric vehicle and a sum of the voltage V42a output from the first group of first switches 42a and the preset voltage Va, that is, it is made that Vouta≤min(Vr, V42a+Va), to ensure that the voltage difference between the two ends of the first switch is less than or equal to the rated breaking voltage of the first switch when the first switch in the first group of first switches 42a is turned off under load. For specific descriptions, refer to the related descriptions in the embodiment shown in FIG. 6. Details are not described herein again.

In some embodiments, with reference to FIG. 6 and FIG. 7, the charging device 40 further includes a main controller 44. The main controller 44 may be separately disposed in the charging device 40, or the main controller 44 may be integrated into any charging module 41.

In an example, the main controller 44 may be configured to: obtain the required voltage Vr sent by the electric vehicle and a voltage at a detection point corresponding to each charging module 41 in the charging device 40, and dynamically adjust a given voltage of a voltage loop in a closed control circuit of each charging module 41 in the charging device 40.

In another example, each charging module 41 further includes a module controller. The main controller 44 may be configured to forward only the required voltage Vr sent by the electric vehicle to the module controller in each charging module 41 in the charging device 40. The module controller in each charging module 41 is configured to obtain a voltage at a detection point corresponding to the charging module 41 in which the module controller is located, and dynamically adjust a given voltage of a voltage loop in a closed control circuit of the charging module 41 in which the module controller is located.

It should be noted that, for ease of description and understanding, this embodiment of this application is described by using an example in which the main controller 44 is configured to obtain the required voltage Vr sent by the electric vehicle and the output voltage of the charging module 41, and dynamically adjust the given voltage of the voltage loop in the closed control circuit of the charging module 41.

In some embodiments, still with reference to FIG. 6 and FIG. 7, the charging device 40 further includes one or more voltage sampling components 45. One voltage sampling component 45 is configured to sample an output voltage of one charging module 41.

For example, as shown in FIG. 6 and FIG. 7, the charging device 40 includes two voltage sampling components 45, that is, includes a voltage sampling component 45a and a voltage sampling component 45b. The voltage sampling component 45a is configured to sample the output voltage Vouta of the charging module 41a, and the voltage sampling component 45b is configured to sample the output voltage Voutb of the charging module 41b. In this way, the main controller 44 in the charging device 40 may respectively obtain the output voltage Vouta of the charging module 41a and the output voltage Voutb of the charging module 41b by using the voltage sampling component 45a and the voltage sampling component 45b.

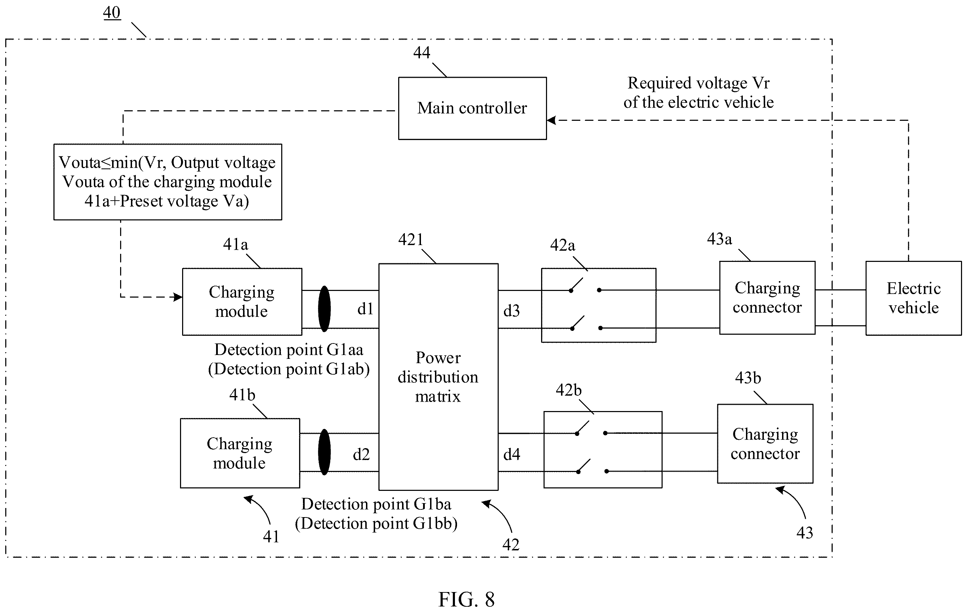

FIG. 8 to FIG. 10 each are a diagram of another specific structure of the charging device 40 shown in FIG. 5 according to an embodiment of this application.

In some embodiments, with reference to FIG. 8 to FIG. 10, there are a plurality of charging modules 41 and a plurality of charging connectors 43 in the charging device 40, and the switch circuit 42 includes a plurality of groups of first switches and a power distribution matrix 421. One charging module 41 is connected to one end of one group of first switches by using the power distribution matrix 421, and the other end of the group of first switches is connected to one charging connector 43. The power distribution matrix 421 may be a matrix that includes a plurality of second switches, and the power distribution matrix 421 is configured to connect a circuit between the charging module 41 and the one end of the group of first switches. In other words, each charging module 41 in the charging device 40 is connected to one end of each group of first switches by using the power distribution matrix 421, and the other end of each group of first switches is connected to one charging connector 43. The charging device 40 may be, for example, the split charging device shown in (a) in FIG. 1.

For example, as shown in FIG. 8 to FIG. 10, the charging device 40 includes two charging modules 41 and two charging connectors 43, that is, includes a charging module 41a, a charging module 41b, a charging connector 43a, and a charging connector 43b. The switch circuit 42 includes the power distribution matrix 421 and two groups of first switches, that is, includes the power distribution matrix 421, a first group of first switches 42a, and a second group of first switches 42b. An output end of the charging module 41a and an output end of the charging module 41b are connected to a first group of input ends d1 and a second group of input ends d2 of the power distribution matrix 421 in a one-to-one correspondence, a first group of output ends d3 and a second group of output ends d4 of the power distribution matrix 421 are connected to one end of the first group of first switches 42a and one end of the second group of first switches 42b in a one-to-one correspondence, and the other end of the first group of first switches 42a and the other end of the second group of first switches 42b are connected to the charging connector 43a and the charging connector 43b in a one-to-one correspondence.

In some embodiments, refer to FIG. 8. A detection point in a circuit between any charging module 41 and any charging connector 43 in the charging device 40 is located between the any charging module 41 and the power distribution matrix 421. In this way, a voltage at the detection point corresponding to the any charging module 41 may be understood as an output voltage of the any charging module 41.

For example, as shown in FIG. 8, both a detection point Glaa in a circuit between the charging module 41a and the charging connector 43a and a detection point Glab in the circuit between the charging module 41a and the charging connector 43b are located between the charging module 41a and the first group of input ends d1 of the power distribution matrix 421. In other words, the detection point Glaa and the detection point G1ab may be considered as a same detection point located at the output end of the charging module 41a. In this way, when the charging module 41a outputs electric energy by using the charging connector 43a or the charging connector 43b, both an output voltage at the detection point Glaa and an output voltage at the detection point G1ab can be understood as the output voltage Vouta of the charging module 41a.

Similarly, an output voltage at a detection point G1ba in a circuit between the charging module 41b and the charging connector 43a and an output voltage at a detection point G1bb in a circuit between the charging module 41b and the charging connector 43b may be understood as the output voltage Voutb of the charging module 41b.

Based on the foregoing design, when any charging module 41 in the charging device 40 charges the electric vehicle by using any charging connector 43, the charging device 40 may obtain an output voltage of the any charging module 41, to determine a voltage at a detection point in a circuit between the any charging module 41 and one charging connector 43 connected to the any charging module.

Refer to FIG. 8. In an example, the charging device 40 is configured to: after the charging module 41a starts to output electric energy to the electric vehicle by using the charging connector 43a, first obtain the output voltage Vouta of the charging module 41a, and then control the output voltage Vouta of the charging module 41a to be less than or equal to a smallest voltage in the required voltage Vr of the electric vehicle and a sum of the output voltage Vouta of the charging module 41a and the preset voltage Va. In other words, Vouta≤min(Vr, Vouta+Va).

The preset voltage Va is less than or equal to a smallest voltage in the following voltages: a rated breaking voltage of the first switch in the first group of first switches 42a, and a rated breaking voltage of the second switch that is in the power distribution matrix 421 and that is connected between the charging module 41a and the first group of first switches 42a.

Based on the foregoing design, when the charging device 40 controls the output voltage Vouta of the charging module 41a to be less than or equal to the smallest voltage in the required voltage Vr of the electric vehicle and the sum of the output voltage Vouta of the charging module 41a and the preset voltage Va, a voltage difference between two ends of the first switch in the first group of first switches 42a may be less than the rated breaking voltage of the first switch, and the second switch that is in the power distribution matrix 421 and that is connected between the charging module 41a and the first group of first switches 42a can be less than the rated breaking voltage of the second switch. In this way, in a process in which the first switch in the first group of first switches 42a or the second switch that is in the power distribution matrix 421 and that is connected between the charging module 41a and the first group of first switches 42a is turned off under load, it can be ensured that the voltage difference between the two ends of the switch that is currently turned off under load is less than or equal to the rated breaking voltage of the switch. This can prevent switch contacts from getting stuck, and improve safety and reliability of the charging device.

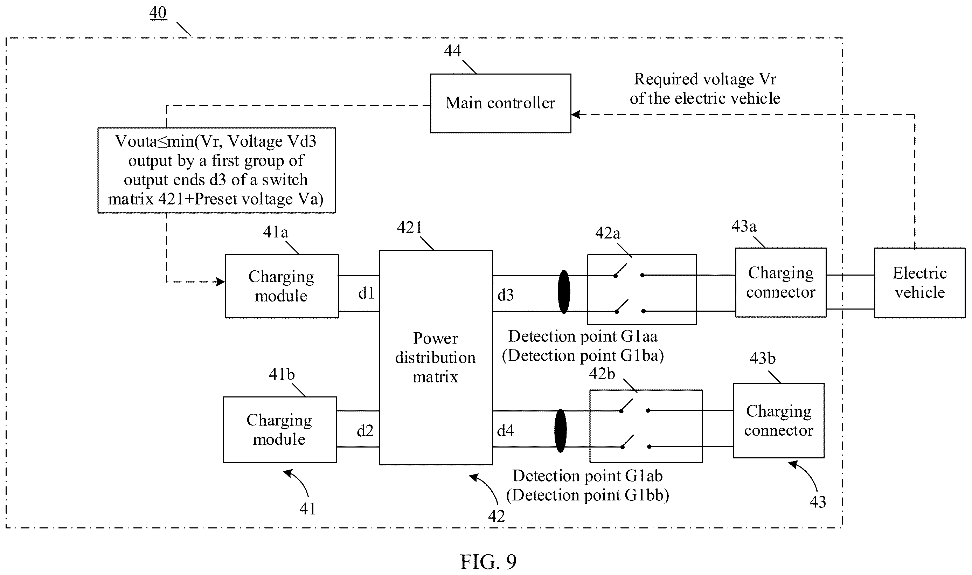

In some other embodiments, refer to FIG. 9. A detection point in a circuit between any charging module 41 and any charging connector 43 in the charging device 40 is located between the power distribution matrix 421 and the any charging connector 43. In this way, a voltage at the detection point corresponding to the any charging module 41 may be understood as a voltage output by the power distribution matrix 421 to the any charging connector 43.

For example, as shown in FIG. 9, both a detection point Glaa in a circuit between the charging module 41a and the charging connector 43a and a detection point G1ba in a circuit between the charging module 41b and the charging connector 43a are located between the first group of output ends d3 of the power distribution matrix 421 and the first group of switches 42a. In other words, the detection point Glaa and the detection point G1ba may be considered as a same detection point located at the first group of output ends d3 of the power distribution matrix 421. In this way, when the charging module 41a or the charging module 41b outputs electric energy by using the charging connector 43a, both the output voltage at the detection point Glaa and the output voltage at the detection point G1ba can be understood as a voltage Vd3 output from the first group of output ends d3 of the power distribution matrix 421.

Similarly, the output voltage at the detection point G1ab in the circuit between the charging module 41a and the charging connector 43b and the output voltage at the detection point G1bb between the charging module 41b and the charging connector 43b may be understood as a voltage Vd4 output from the second group of output ends d4 of the power distribution matrix 421.

Based on the foregoing design, when any charging module 41 in the charging device 40 charges the electric vehicle by using any charging connector 43, the charging device 40 may obtain a voltage output from the power distribution matrix 421 to the any charging connector 43, to determine a voltage at a detection point in a circuit between the any charging module 41 and one charging connector 43 connected to the any charging module.

For example, as shown in FIG. 9, when the charging module 41a outputs electric energy to the electric vehicle by using the charging connector 43a, the charging device 40 may control the output voltage Vouta of the charging module 41a to be less than or equal to the smallest voltage in the required voltage Vr of the electric vehicle and a sum of the voltage Vd3 and the preset voltage Va, that is, it is made that Vouta≤min(Vr, Vd3+Va), to ensure that the voltage difference between the two ends of the switch is less than or equal to the rated breaking voltage of the switch when the first switch or the second switch is turned off under load. For specific descriptions, refer to the related descriptions in the embodiment shown in FIG. 8. Details are not described herein again.

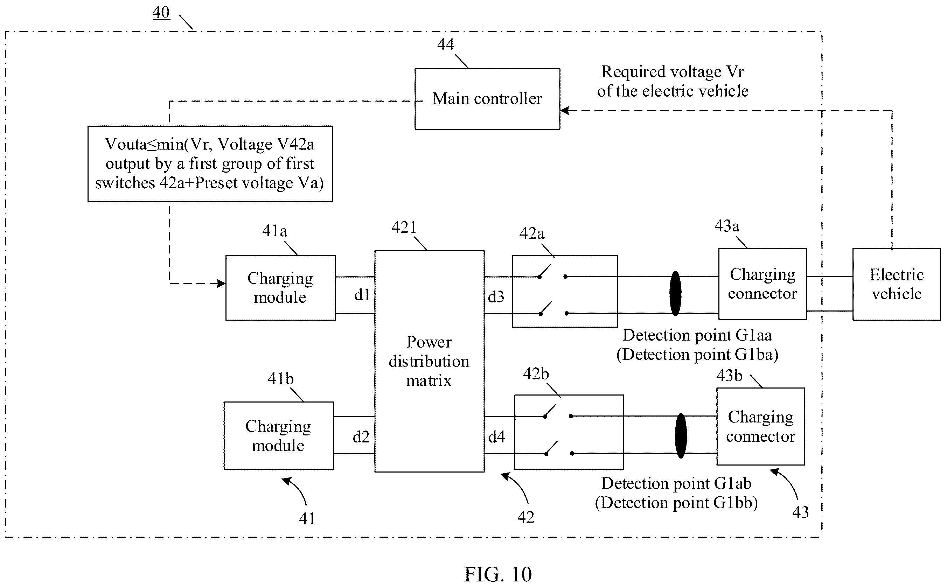

In some other embodiments, refer to FIG. 10. A detection point in a circuit between any charging module 41 and any charging connector 43 in the charging device 40 is located between the any charging connector 43 and one group of first switches connected to the any charging connector. In this way, a voltage at the detection point corresponding to the any charging module 41 may be understood as a voltage output by the group of first switches connected to the any charging module.

For example, as shown in FIG. 10, both a detection point Glaa in a circuit between the charging module 41a and the charging connector 43a and a detection point G1ba in a circuit between the charging module 41b and the charging connector 43 are located between the other end of the first group of switches 42a and the charging connector 43a. In other words, the detection point Glaa and the detection point G1ba may be considered as a same detection point located at an output end of the first group of switches 42a. In this way, when the charging module 41a or the charging module 41b outputs electric energy by using the charging connector 43a, both the output voltage at the detection point G1aa and the output voltage at the detection point G1ba can be understood as a voltage V42a output from an output end of the first group of switches 42a.

Similarly, the output voltage at the detection point G1ab in the circuit between the charging module 41a and the charging connector 43b and the output voltage at the detection point G1bb between the charging module 41b and the charging connector 43b may be understood as a voltage V42b output from an output end of the second group of switches 42b.

Based on the foregoing design, when any charging module 41 in the charging device 40 charges the electric vehicle by using any charging connector 43, the charging device 40 may obtain a voltage output from one group of first switches connected to the any charging connector 43, to determine a voltage at a detection point in a circuit between the any charging module 41 and the charging connector 43 connected to the any charging module.

For example, as shown in FIG. 10, when the charging module 41a outputs electric energy to the electric vehicle by using the charging connector 43a, the charging device 40 may control the output voltage Vouta of the charging module 41a to be less than or equal to the smallest voltage in the required voltage Vr of the electric vehicle and a sum of the voltage V42a and the preset voltage Va, that is, it is made that Vouta≤min(Vr, V42a+Va), to ensure that the voltage difference between the two ends of the switch is less than or equal to the rated breaking voltage of the switch when the first switch or the second switch is turned off under load. For specific descriptions, refer to the related descriptions in the embodiment shown in FIG. 8. Details are not described herein again.

In some embodiments, with reference to FIG. 8 to FIG. 10, rated output power Pe of all charging modules 41 in the charging device 40 is equal.

The charging device 40 is further configured to: when one charging connector 43 is connected to the electric vehicle, control charging modules 41 whose quantity is equal to a rounded-up value of (Vr×Ir/Pe) to output electric energy to the electric vehicle by using the charging connector, and when a rounded-up value of (Vmin×Ir/Pe) is less than the rounded-up value of (Vr×Ir/Pe), reduce the quantity of charging modules 41 that output electric energy to the rounded-up value of (Vmin×Ir/Pe).

In the foregoing formula, Vmin represents the smallest voltage in the required voltage Vr of the electric vehicle and the sum of the voltage at the detection point in the circuit between the charging connector 43 and the charging module 41 that outputs electric energy and the preset voltage Va. Vr represents the required voltage of the electric vehicle, Ir represents a required current of the electric vehicle, and the required voltage of the electric vehicle and the required current of the electric vehicle are respectively the required voltage and a required current that are sent by the electric vehicle to the charging device 40. Pe represents the rated output power of the charging module.

Specifically, an example in which the charging connector 43a shown in FIG. 8 to FIG. 10 is connected to the electric vehicle is used. After confirming that the vehicle is connected to a charging pile, the charging device 40 may first calculate, based on the required voltage Vr and the required current Ir that are sent by the electric vehicle and the rated output power Pe of the charging module 41, a quantity m of charging modules 41 that need to operate, and then control the m charging modules 41 to output electric energy together. m is a positive integer greater than or equal to 2. Because the m charging modules 41 are connected in parallel for output, voltages at detection points corresponding to all of the m charging modules 41 are equal. Further, after the m charging modules 41 start to output electric energy, the charging device 40 may obtain a voltage at a detection point in a circuit between any one of the m charging modules 41 and the charging connector 43a, and recalculate, based on the smallest voltage in the required voltage Vr of the electric vehicle and the sum of the voltage at the detection point and the preset voltage Va, a quantity n of charging modules 41 that need to operate. n is a positive integer greater than or equal to 1.

It should be understood that, because the required voltage Vr sent by the electric vehicle is usually greater than the actual voltage of the power battery, a voltage obtained by selecting a smallest value in the required voltage Vr of the electric vehicle and the sum of the voltage at the detection point and the preset voltage Va is closer to the actual voltage of the power battery, so that the quantity n of charging modules 41 obtained through calculation based on the voltage obtained by selecting a smallest value is also closer to an actual requirement of the electric vehicle. Therefore, when n is less than m, the charging device 40 may reduce the quantity of charging modules 41 that operate in the charging device 40 from m to n.

For example, as shown in FIG. 8 to FIG. 10, when the required voltage Vr sent by the electric vehicle is 450 V, the required current Ir is 160 A, and rated output power Pe of the charging module 41a and the charging module 41b is 60 kW, the charging device 40 determines, based on a result of rounding up the formula (Vr×Ir/Pe), that required power of the electric vehicle is 72 kW, to determine that two charging modules 41 need to be controlled to operate. Further, the charging device 40 controls the charging module 41a and the charging module 41b to output electric energy together.

After the charging module 41a and the charging module 41b start to output electric energy, the charging device 40 obtains the voltage Vmin based on the voltage at the detection point G1aa, and determines, based on a result of rounding up the formula (Vmin×Ir/Pe), that required power of the electric vehicle is 56 kW, to determine that one charging module 41 needs to be controlled to operate. In this way, the charging device 40 may reduce the quantity of charging modules 41 in an operating state from 2 to 1. In this way, power utilization of the charging device 40 can be improved when actual required charging power of the electric vehicle is met.

In some other embodiments, still with reference to FIG. 8 to FIG. 10, rated output power Pe of all charging modules 41 in the charging device 40 is equal. The charging device 40 is further configured to: when one charging connector 43 is connected to the electric vehicle, control one charging module 41 to output electric energy to the electric vehicle by using the charging connector 43, and when a rounded-up value of (Vmin×Ir/Pe) is less than a rounded-up value of (Vr×Ir/Pe), increase the quantity of charging modules 41 that output electric energy to the rounded-up value of (Vmin×Ir/Pe).

In the foregoing formula, Vmin represents the smallest voltage in the required voltage Vr of the electric vehicle and the sum of the voltage at the detection point in the circuit between the charging module 41 that first outputs electric energy and the charging connector 43 and the preset voltage Va. Vr represents the required voltage of the electric vehicle, and Ir represents the required current of the electric vehicle. Pe represents the rated output power of the charging module 41.

Specifically, an example in which the charging connector 43a shown in FIG. 8 to FIG. 10 is connected to the electric vehicle is still used. After confirming that the vehicle is connected to a charging pile, the charging device 40 may calculate, based on the required voltage Vr and the required current Ir that are sent by the electric vehicle and the rated output power Pe of the charging module 41, a quantity m of charging modules 41 that need to operate, and control one charging module 41 to first output electric energy. m is a positive integer greater than or equal to 2. Then, after the charging module 41 starts to output electric energy, the charging device 40 may obtain the voltage at the detection point in the circuit between the charging module 41 and the charging connector 43a, and recalculate, based on the smallest voltage in the required voltage Vr of the electric vehicle and the sum of the voltage at the detection point and the preset voltage Va, a quantity n of charging modules 41 that need to operate. n is a positive integer greater than or equal to 1.

Further, when n is less than m, the charging device 40 may make the quantity of charging modules 41 that operate in the charging device 40 equal to n. Compared with increasing the quantity of charging modules 41 that operate in the charging device 40 from one to m, this can improve power utilization of the charging device 40 when actual required power of the electric vehicle is met. For specific descriptions, refer to the foregoing embodiments. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging device, wherein the charging device comprises a charging module, a switch circuit, and a charging connector, the charging module is connected to the charging connector through the switch circuit, and the switch circuit is configured to connect a circuit between the charging module and the charging connector; and
the charging device is configured to: when the charging module outputs electric energy to an electric vehicle by using the charging connector,
when a current in the circuit between the charging module and the charging connector decreases to be less than or equal to a first preset current, and the current in the circuit remains unchanged for preset duration before starting to decrease, control an output voltage of the charging module to be less than or equal to a sum of a voltage at a detection point in the circuit and a preset voltage, wherein
the preset duration is greater than 1 second, and the preset voltage is less than or equal to a rated breaking voltage of a switch in the switch circuit.

2. The charging device according to claim 1, wherein when the charging module outputs electric energy, the current in the circuit decreases to be less than or equal to the first preset current when the switch is turned off, and remains unchanged for the preset duration before the switch is turned off; and
the charging device is configured to:
when the charging module outputs electric energy and the switch is turned off, control the output voltage of the charging module to be less than or equal to the sum of the voltage at the detection point and the preset voltage.

3. The charging device according to claim 1 or 2, wherein the charging device is configured to: after the charging module starts to output electric energy,
first obtain the voltage at the detection point, and then control the output voltage of the charging module to be less than or equal to a smallest voltage in a required voltage of the electric vehicle and the sum of the voltage at the detection point and the preset voltage, wherein the required voltage of the electric vehicle is a required voltage sent by the electric vehicle to the charging device.

4. The charging device according to claim 3, wherein the charging device is configured to: when the charging module outputs electric energy,
when the current in the circuit decreases to be less than or equal to the first preset current at a first moment, and the current in the circuit remains unchanged for the preset duration before starting to decrease, adjust the output voltage of the charging module to be equal to a smallest voltage in the required voltage of the electric vehicle and the sum of the voltage at the detection point and the preset voltage that are corresponding to the first moment, and maintain the output voltage of the charging module unchanged after the adjustment.

5. The charging device according to claim 4, wherein the first preset current is greater than or equal to 0 A and less than or equal to 20 A.

6. The charging device according to claim 1 or 2, wherein the charging device is configured to: when the charging module outputs electric energy,
when the current in the circuit decreases to be less than or equal to the first preset current and the current in the circuit remains unchanged for the preset duration before starting to decrease, first obtain the voltage at the detection point, and then adjust the output voltage of the charging module to be less than or equal to a smallest voltage in a required voltage of the electric vehicle and the sum of the voltage at the detection point and the preset voltage.

7. The charging device according to any one of claims 1 to 6, wherein the charging device is further configured to: after the charging module starts to output electric energy,
when an output current of the charging module is greater than a second preset current, reduce a change speed of the output voltage of the charging module.

8. The charging device according to any one of claims 1 to 7, wherein there are one or more charging modules and one or more charging connectors, the one or more charging modules are divided into one or more groups, each group of charging modules comprises one charging module or at least two charging modules connected in parallel, the switch circuit comprises one or more groups of first switches, and one group of charging modules is connected to one charging connector through one group of first switches; and
the detection point in the circuit between each charging module of the group of charging modules and the charging connector is located between each charging module and the group of first switches, or between the group of first switches and the charging connector.

9. The charging device according to any one of claims 1 to 7, wherein there are a plurality of charging modules and a plurality of charging connectors, the switch circuit comprises a plurality of groups of first switches and a power distribution matrix, one charging module is connected to one end of one group of first switches through the power distribution matrix, the other end of the group of first switches is connected to one charging connector, and the power distribution matrix is configured to connect a circuit between the charging module and the one end of the group of first switches; and
the detection point in the circuit between the charging module and the charging connector is located in one of the following positions:
between the charging module and the power distribution matrix, between the power distribution matrix and the group of first switches, and between the group of first switches and the charging connector.

10. The charging device according to claim 9, wherein the preset voltage is less than or equal to a smallest voltage in the following voltages:
the rated breaking voltage of the first switch in the group of first switches, and a rated breaking voltage of a second switch that is in the power distribution matrix and that is connected between the charging module and the group of first switches.

11. The charging device according to any one of claims 8 to 10, wherein rated output power of all charging modules in the charging device is equal; and
the charging device is further configured to: when the charging connector is connected to the electric vehicle,
control charging modules whose quantity is equal to a rounded-up value of (Vr×Ir/Pe) to output electric energy to the electric vehicle by using the charging connector, and when a rounded-up value of (Vmin×Ir/Pe) is less than the rounded-up value of (Vr×Ir/Pe), reduce the quantity of charging modules that output electric energy to the rounded-up value of (Vmin×Ir/Pe), wherein
Vmin represents the smallest voltage in the required voltage of the electric vehicle and the sum of the voltage at the detection point in the circuit between the charging connector and the charging module that outputs electric energy and the preset voltage, Vr represents the required voltage of the electric vehicle, Ir represents a required current of the electric vehicle, the required voltage of the electric vehicle and the required current of the electric vehicle are respectively the required voltage and a required current that are sent by the electric vehicle to the charging device, and Pe represents the rated output power of the charging module.

12. The charging device according to any one of claims 8 to 10, wherein rated output power of all charging modules in the charging device is equal; and
the charging device is further configured to: when the charging connector is connected to the electric vehicle,
control one charging module to output electric energy to the electric vehicle by using the charging connector, and when a rounded-up value of (Vmin×Ir/Pe) is less than a rounded-up value of (Vr×Ir/Pe), make a quantity of charging modules that output electric energy equal to the rounded-up value of (Vmin×Ir/Pe), wherein
Vmin represents the smallest voltage in the required voltage of the electric vehicle and the sum of the voltage at the detection point in the circuit between the charging connector and the charging module and the preset voltage, Vr represents the required voltage of the electric vehicle, Ir represents a required current of the electric vehicle, the required voltage of the electric vehicle and the required current of the electric vehicle are respectively the required voltage and a required current that are sent by the electric vehicle to the charging device, and Pe represents the rated output power of the charging module.
